# EUROPEAN PATENT APPLICATION

(11) **EP 2 821 445 A1**
(43) Date of publication of application: **07.01.2015**
(21) Application number: 13175431.9
(22) Date of filing: 05.07.2013
(51) Int. Cl.: C09C 3/10, C09C 1/24

(54) **Method of tracing engineered nanoparticles**

(71) Applicant: Danmarks Tekniske Universitet, 2800 Kgs. Lyngby (DK)
(72) Inventor: Uthuppu, Basil, 2800 Kgs. Lyngby (DK); Jakobsen, Mogens Havsteen, 2720 Vanløse (DK); Fjordbøge, Annika Sidelmann, 2300 Copenhagen S (DK); Broholm, Mette Martina, 2000 Frederiksberg (DK)
(74) Representative: Inspicos A/S

(57) **Abstract**

The present application discloses a population of non-aggregated polymer-coated nanoparticles having a mean particle size (diameter) in the range of 1-100 nm, said population comprising (i) a first subpopulation of (re)active particles coated with a first polymer, and (ii) a second subpopulation of non-(re)active tracer particles coated with a second polymer, wherein the weight ratio between said first subpopulation and said second subpopulation is from between 85:15 to 99.99:0.01, as well as a composition comprising such a population. The population of particles is particularly useful for tracking of particles in methods for remediation, including in-situ remediation, of contaminated ground water and for water treatment.

## Description

### FIELD OF THE INVENTION

The present invention relates to the field of tracing of the spreading of engineered nanoparticles in the environment. In particular, the invention relates to a population of nanoparticles non-aggregated polymer-coated nanoparticles comprising a subpopulation of (re)active particles, and a subpopulation of non-(re)active tracer particles, and to the use of such populations for the tracing of nanoparticles e.g. in connection with remediation, in particular *in-situ* remediation, of contaminated ground water.

### BACKGROUND OF THE INVENTION

The use of engineered nanoparticles may bring significant innovation and advances to society and benefits for human health and the environment. At the same time, it will be necessary to ensure their safety for humans and the environment and to avoid negative impacts on society. Nanoparticles are manufactured for their specific properties providing possibilities for new uses and products. These specific properties may lead to different interactions with the physiology in humans and the environment and to effects that significantly differ from those known of materials without such properties. Both the small size and engineered structure of nanoparticles create special properties e.g. due to increased surface area which distinguish them from the materials with the same materials with a different particle size and structure. Thus, engineered nanoparticles behave differently when they are dispersed as single particles compared to their agglomerated counterparts or the same bulk material.

Hundreds of products containing nanoparticles are already in use. Examples are paints, antibacterial coatings, and skin care products. It is important to note that as long as the nanoparticles are embedded in a matrix of larger sized structures, they will not exert the specific characteristics of the individual nanoparticles in the free form.

Engineered nanoparticles are entering onto use in environmental applications, e.g. removal of organic and inorganic contaminants in water, acting as biocides to remove bacteria and viruses, and for in-situ remediation of sub-surface contaminated land zones.

Engineered nanoparticles for such applications includes nanoscale zero valent iron (nZVI) for the treatment of water polluted by a large spectrum of contaminants by reduction, nZVI for in-situ remediation of sub-surface source zones contaminated with solvent dense non aqueous phase liquids (DNAPL), photo-reactive titanium dioxide nanoparticles for removal or organic contaminants by oxidation and as a biocide by releasing strongly active oxygen species, and silver nanoparticles acting as biocides.

Suspensions of such reactive nanoparticles are not very stable as they tend to aggregate, thereby losing their properties as single particles. Coatings are used to enhance the colloid stability in high concentrations and also for sub-surface remediation, enhancing their mobility in ground water. Such coatings include a large variety of natural and synthetic polymers, but increasing the stability and mobility of such particles may lead to unintended effects on the environment and human health. The principle concerns to mobility (the capacity for nanoparticle release and spread) and toxicity (the capacity of released nanoparticles to cause harm).

### OBJECT OF THE INVENTION

The objective of this invention is to render the population of (re)active nanoparticles traceable. This is achieved by introducing non-(re)active tracer nanoparticles which are coated to have the same mobility as the (re)active nanoparticles. Tracer nanoparticles of this invention can be added in very low amounts to the population of (re)active particles to study the mobility of these particles both in the laboratory environment, in field tests as well as in the final field applications.

Suitable, tracer nanoparticles of the invention differ in composition and properties to be easily distinguished from what is normally found in the natural environment and from the reactive nanoparticles. Furthermore, tracer nanoparticles have distinct optical properties, which offer the potential of detecting down to single particles using non-destructive optical techniques.

### SUMMARY OF THE INVENTION

In a first aspect the present invention relates to a population of nanoparticles, cf. claim 1.

In a second aspect, the present invention relates to a composition of the population of nanoparticles, cf. claim 11.

In further aspects, the present invention relates to the use of the population of nanoparticles, e.g. for for remediation, including *in-situ* remediation, of contaminated ground water, and for water treatment, cf. claims 13 and 14.

### BRIEF DESCRIPTION OF THE FIGURES

Figure 1. TEM image of bare nZVI.
Figure 2. TEM image of nZVI:PVA-COOH.
Figure 3. Colloidal stability of nZVI:PVA-COOH and dependence of polymer concentration on colloidal stability. Absorption of 0.1 g/L nZVI:PVA-COOH was measured at 508 nm for 60 min at an interval of 0.5 min.
Figure 4. TEM images of gold nanoparticles (nAu).
Figure 5. UV-Visible spectra of ∼20nm size nAu. Scans between 400 to 600 nm are plotted for a two-fold dilution series to show the consistency of the plasmonic peak at ∼520 nm with respect to dilution. The concentrations are in mg/mL.
Figure 6. UV-Visible spectra (scan from 300 to 800 nm)of suspensions of nZVI: PVA-COOH, nAU:PVA-COOH and a mixture of nZVI:PVA-COOH and nAU: PVA-COOH. The concentrations in the mixture are in the ratio of 1:0.1. Purple line obtained by mathematical calculations.
Figure 7. Experimental setup for testing partitioning of coated nAu between aqueous suspension and organic solvents at time t=0 hr.
Figure 8. Migration of coated nAu towards the organic solvents after 8 hrs of shaking.
Figure 9. A plot of absorbances of aqueous layers of nAu suspensions mixed with organic solvents measured with respect to time of shaking.
Figure 10. The experimental setup for testing the mobility of nAu.
Figure 11. A) Mobility of nAu:PVA-COOH (1:1) and chloride as tracer for determining the retardation factor of coated nAu; B) Comparison of mobilities of uncoated and coated nAu; C) Effect of coating on the mobility of nAu through a sand column; D) Effect of coating concentration on the mobility of nAu through a sand column.

### DETAILED DISCLOSURE OF THE INVENTION

### A population of nanoparticles

As mentioned above, the present invention provides a population of nanoparticles. More specifically, the first aspect of the invention relates to a population of non-aggregated polymer-coated nanoparticles having a mean particle size in the range of 1-100 nm, said population comprising (i) a first subpopulation of (re)active particles coated with a first polymer, and (ii) a second subpopulation of non-(re)active tracer particles coated with a second polymer, wherein the weight ratio between said first subpopulation and said second subpopulation is from 85:15 to 99.99:0.01.

When used herein, the terms "nanoparticle", "nanoscale particle", "nanosized particle" an the like refers to particles having sizes (diameters) in the sub-micrometer range, i.e. such that at least 50 % of the particles in the number size distribution have a diameter in the size range of 1-100 nm.

In some embodiments, at least 90 % of the particles (D90) in have a diameter of at the most 200 nm, preferably at the most 100 nm.

In some variants, the most 10 % of the particles (D10) have a diameter of 1 nm or less, preferably a diameter of 5 nm or less.

When used herein in connection with "particles", the term "size" is intended to mean the diameter of the (re)active or the non-(re)active tracer particle without the polymer coating. Such a diameter can be found by using standard equipment like transmission electron microscopy (TEM).

The term "mean particle size" is intended to mean the average diameter determined by TEM measurements.

Particularly interesting are those populations of particles wherein at least 80 % of the particle, such as at least 90 % of the particles, in the number size distribution have an average diameter in the size range of 1-200 nm, or 10-200 nm, or 1-100 nm, or 1-50 nm, or 10-100 nm, or 10-50 nm.

Typically, the weight ratio between said first subpopulation and said second subpopulation is from 85:15 to 99.99:0.01, such as from 90: 10 to 99.95:0.05, or from 90: 10 to 99: 1, or from 92:8 to 99.9:0.1, or from 94:6 to 99.8:0.2, or from 95:5 to 99.5:0.5.

It should be understood that the population is substantially non-aggregated, i.e. the polymer coating are used to enhance the colloid stability and mobility in water and to keep their properties as single particles intact.

The population has interesting properties which can be utilised in procedures for tracing the spreading of nanoparticles corresponding to those of the first subpopulation in the environment, in particular in aqueous environments, by means of the tracer particles of the second subpopulation, because these tracer particles can more easily and/or reliably be detected.

### The first subpopulation

The first subpopulation consists of (re)active particles coated with a first polymer.

When used herein, the term "(re)active" is intended to mean they are able to remove organic and inorganic contaminants in water, acting as a biocide to remove bacteria and viruses in water, and for in-situ remediation of sub-surface contaminated land zones.

In one embodiment hereof, the particles of the first subpopulation are catalytically active particle. Examples of catalytically active particles are nZVI for the treatment of water polluted by a large spectrum of contaminants, nZVI for in-situ remediation of sub-surface source zones contaminated with DNAPL, photo-reactive titanium dioxide nanoparticles for removal of organic contaminants by oxidation and as biocide by releasing strongly active oxygen species, and silver nanoparticles acting as biocides.

More generally, the first subpopulation of (re)active particles, including catalytically active particles, is typically selected from zero valent iron particles (ZVI), carbo-iron composites (for abiotic reduction, sorption enhanced), colloidal Fe-zeolites (oxidation catalysts, sorption enhanced), iron(II/III) particles (bioengineered and commercial for enhancement of microbial degradation), iron (IV) particles (ferrates, as oxidizing agents), and non-ZVI metals and alloys (e.g. aluminum and magnesium for abiotic reduction). One particularly interesting example is zero valent iron particles.

"Abiotic reduction" refers to degradation of chlorinated solvents and other halogenated contaminants, whereas "oxidation/oxidizing" refers to other contaminants such as BTEX (i.e. monoaromatic hydrocarbons like benzene, toluene, ethylbenzene, and xylenes) and PAH (polyaromatic hydrocarbons).

The particles of the first subpopulation are coated with a first natural or synthetic polymer, in particular a polymer selected from hydrophilic (water loving, having a high affinity/solubility in water) polymers which strongly enhances the colloid stability of the nanoparticles in water and amphiphilic (having a high affinity / solubility in both water and a-polar organic solvents) polymers which enhances the colloid stability of the nanoparticles in both water and in organic solvents.

Illustrative examples of hydrophilic polymers are carboxymethyl cellulose, nanofibrillated cellulose, polyethylene imine, hyaluronic acid, polysaccharides, alginate, and chiosan.

Illustrative examples of amphiphilic polymers are polyethylene glycols which can be obtained from many vendors in various molecular weight ranges, Poly (vinylpyrrolidone-co-vinlyacetate), (PVP/VA) e.g. Luviskol® VA64W from BASF, kuray K-Polymer KL-318 (PVA-COOH, molecular weight estimated 150 000 g/mol +- 25 000), and in general copolymers e.g. alternating copolymers with regular alternating A and B units (2), periodic copolymers with A and B units arranged in a repeating sequence (e.g. (A-B-A-B-B-A-A-A-A-B-B-B)n), statistical copolymers are copolymers in which the sequence of monomer residues follows a statistical rule. If the probability of finding a given type monomer residue at a particular point in the chain is equal to the mole fraction of that monomer residue in the chain, then the polymer may be referred to as a truly random copolymer, block copolymers comprise two or more homopolymer subunits linked by covalent bonds. The union of the homopolymer subunits may require an intermediate non-repeating subunit, known as a junction block. Block copolymers with two or three distinct blocks are called diblock copolymers and triblock copolymers, respectively.

In order for the particles of the first subpopulation to exhibit their (re)activity, the particles are preferably coated in a ratio of nanoparticle to polymer (weight:weight) from 1:0.1 to 1:20, such as 1:0.2, 1:0.25, 1:0.5, 1:1, 1:5, 1:10, 1:20 so as to balance the colloid stability and mobility to the desired reactivity.

In order for each (re)active nanoparticle to obtain the desired colloid stability, mobility and reactivity the choice polymer and nanoparticle to polymer ratio is preferably optimized individually.

### The second subpopulation

The second subpopulation consists of non-(re)active particles coated with a second polymer.

When used herein, the term "non-(re)active" is (in contrast to "(re)active") intended to mean that the particles in question do not have any significant reactivity corresponding to that of the (re)active particles, e.g., being able to remove organic and inorganic contaminants in water, acting as a biocide to remove bacteria and viruses in water, and for in-situ remediation of sub-surface contaminated land zones.

Besides being non-(re)active, the particles are preferably also non-toxic e.g. will not in them selves pose any unintended effects on the environment and human health in the amounts used.

Also very importantly, the material of the tracer particles is preferably capable of being detected by a non-destructive optical method at an at least a 100-fold, preferable at an at least a 1000-fold, lower concentration than the material of the (re)active particles. The non-destructive method may, e.g., be bright field microscopy, dark filed scattering and total internal reflection microscopy, fluorescence microscopy, absorption - extinction and interference spectroscopy, fluorescence spectroscopy, pump-prope detection techniques and photoluminescence spectroscopy.

Tracer nanoparticles include metallic nanoparticles which exhibits strong plasmonic modes localized on the interface between the metal and a dielectric. Good metals include gold, silver, and their alloys. The optical response of particles of a size much smaller than the wavelength of the light, can be tuned by controlling the size, shape and composition. Furthermore, single particle detection has been demonstrated offering extremely low detection limits. Metal nanoparticles do not bleach, and they also have very low cytotoxicity.

Tracer nanoparticles include semiconductor nanoparticles also called quantum dots. Typical dots are made of binary alloys such as cadmium selenide, cadmium sulfide, indium arsenide, and indium phosphide. Dots may also be made from ternary alloys such as cadmium selenide sulfide. These quantum dots can contain as few as 100 to 100,000 atoms within the quantum dot volume, with a diameter of 10 to 50 atoms. This corresponds to about 2 to 10 nanometers, and at 10 nm in diameter. Due to the toxicity of the heavy metals used in the fabrication, environmental concerns may limit the use of this type of tracer particles outside the laboratory environment.

Tracer nanoparticles include a newer type of quantum dots which can be made from rare earth doped oxide colloidal phosphor nanoparticles. Unlike semiconductor nanoparticles, excitation was due to UV absorption of host material, which is same for different rare earth doped materials using same host. Multiplexing applications can be thus realized. The emission depends on the type of rare earth, which enables very large stokes shift and is narrower than cadmium selenide quantum dots. The synthesis is aqueous based and the oxide surface might be easier more chemically stable in various environments. As for metallic nanoparticles rare earth doped nanoparticles do not bleach, and offers sensitive multiplex detection using a single UV light source.

Illustrative examples of preferred materials for the tracer particles of the second subpopulation are in particular selected from gold particles and lanthanide-doped particles.

The particles of the second subpopulation are coated with a second polymer, in particular a polymer selected from hydrophilic polymers and amphiphilic polymers. Illustrative examples of hydrophilic polymers and amphiphilic polymers are those described above for the first polymer.

It should be understood that the first polymer and the second polymer may be the same or may be different. The choice of polymer and nanoparticle to polymer ratio must be optimized for the tracer particle to match the colloid stability and mobility of the (re)active particle.

In one embodiment, the second polymer is substantially identical to the first polymer.

The population of nanoparticles, may in addition to the first subpopulation and the second subpopulation include other subpopulations of nanoparticles, e.g. a second population of tracer nanoparticles allowing for multiplexing of detection and/or a second population of (re)active nanoparticles to enhance the reactivity.

In some embodiments, however, the combined amount of the first subpopulation and the second subpopulation constitutes at least 90 % by weight of the total population of nanoparticles, in particular the first subpopulation and the second subpopulation essentially constitutes the entire population.

### A composition

The present invention also relates to a composition comprising the population of nanoparticles as defined hereinabove.

In one embodiment, the composition is a stable colloid solution of nZVI nanoparticles containing tracer nanoparticles, the weight ratio between said first subpopulation and said second subpopulation is from 85:15 to 99.99:0.01, such as from 90:10 to 99.95:0.05, or from 90: 10 to 99: 1, or from 92:8 to 99.9:0.1, or from 94:6 to 99.8:0.2, or from 95:5 to 99.5:0.5.

### Use of the population of nanoparticles

The present invention also relates to the use of the population of nanoparticles defined hereinabove for remediation, including *in-situ* remediation, of contaminated ground water by injecting the population of nanoparticles into the ground water. For suitable techniques see, e.g., Christiansen et al. in Ground Water Monitoring & Remediation 30, no. 4/ Fall 2010/pages 107-122; Damgaard et al. in Groundwater Monitoring & Remediation 33, no. 1/ Winter 2013/pages 48-61; Scheutz et al. in Environ. Sci. Technol. 2008, 42, 9302-9309; and Scheutz et al. in Environ. Sci. Technol. 2010, 44, 5134-5141.

The present invention also relates to the use of the population of nanoparticles defined hereinabove for remediation, including *in-situ* remediation, of contaminated land zones of by injecting the population of nanoparticles into the sub-surface.

The present invention further relates to the use of the population of nanoparticles defined hereinabove for water treatment by passing contaminated water through a filter unit containing the population of nanoparticles.

### EXAMPLES

### Example 1 - Preparation of nanoscale zero valent iron particles

nZVI particle suspension (C_{Fe}⁰ ∼ 1 g/L) was prepared by mixing equal volumes of 0.03 M FeCl₃ and 0.15 M NaBH₄ (Sun et al. 2007, Colloids and Surfaces A: Physiochem. Eng. Aspects 308, 60-66). The borohydride solution was added to the iron chloride with vigorous stirring (300 rpm) at a flow rate of 5 mL/min. After the addition of borohydride solution 30 min of aging time was given.

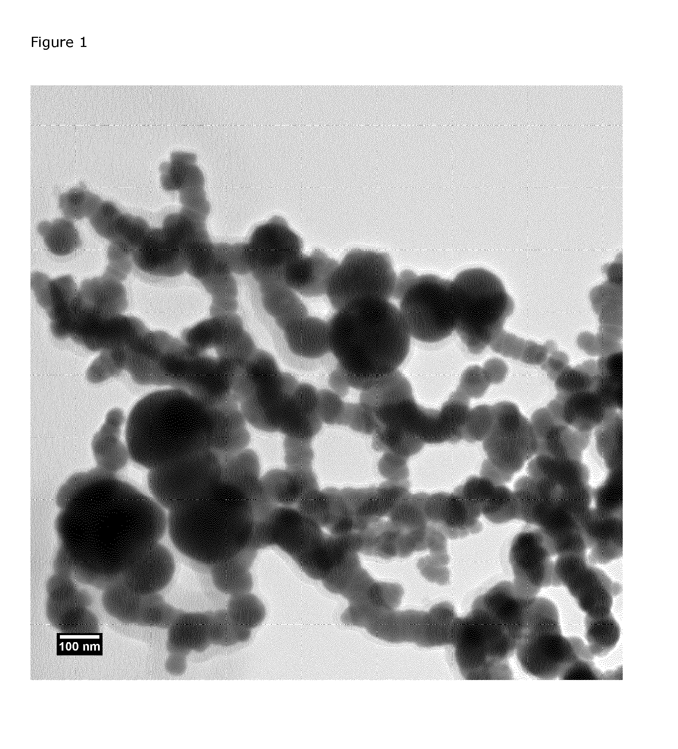

TEM image of these bare nZVI particles is given in Figure 1. They appeared to be clusters of 100 nm size particles and showed poor colloidal stability.This aggregation makes it not mobile in the subsurface along with water bed.

### Example 2 - Preparation of polymer-coated nanoscale zero valent iron particles

To reduce aggregation and thereby increase colloidal stability and mobility in the subsurface, nZVI particle surfaces are modified by using amphiphilic block co-polymers such as PVA-COOH and PVP-VA. This surface conditioning was achieved by reducing the iron precursor in the presence of stabilizing polymers (pre-grafting technique). Depending on the final concentration of FeO required, appropriate quantities of FeCl₃ and polymer solutions are mixed first and then solution of NaBH₄ having approximately five time higher molar concentration than the iron precursor is added into it at a flow rate of 5 mL/min. Absolute alcohol is added to the mixture prior to the addition of NaBH₄ as co-solvent for the polymers and finally well dispersed nZVI is obtained in 25% alcohol suspension.

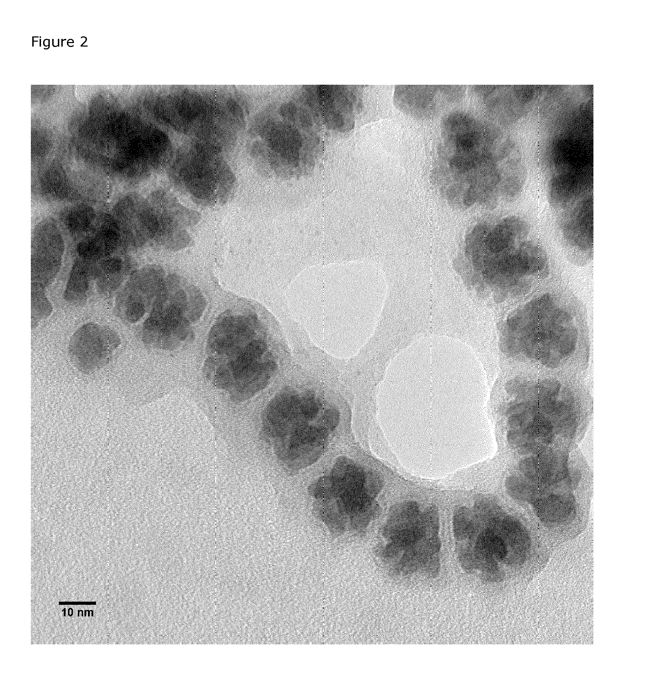

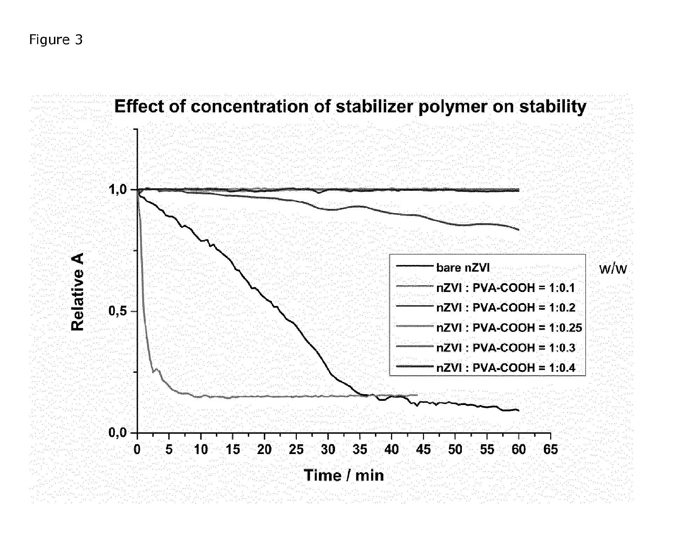

TEM image of nZVI stabilized by PVA-COOH is given in Figure 2. From the figure, it is clear that 15 nm size clusters of smaller particles are well covered by the polymer coating. The colloidal stability of such particles and the dependence of polymer concentration on the colloidal stability are shown in Figure 3.

### Example 3 - Preparation of nanoscale gold particles

Aqueous suspensions of gold nanoparticles (0.5 mg/mL) with low size-distribution were synthesized by the citrate reduction method in the presence of sodium hydroxide (NaOH) described by Li, C., et al., Facile synthesis of concentrated gold nanoparticles with low size-distribution in water: temperature and pH controls. Nanoscale Research Letters, 2011. 6(1): p. 1-10. In detail, 30 mL of 5 mM chloroauric acid, 15 mL of 25 mM NaOH and 6 mL of Milli Q® water were taken in a 100 mL round bottom flask fitted with water condenser and kept in an oil bath at 110°C until boiling. While boiling, 9 mL of slightly warmed 1% (w/v) sodium citrate solution was added rapidly under vigorous stirring. On the appearance of dark wine red colour, the solution heated for 15 more minutes and then cooled down to room temperature.

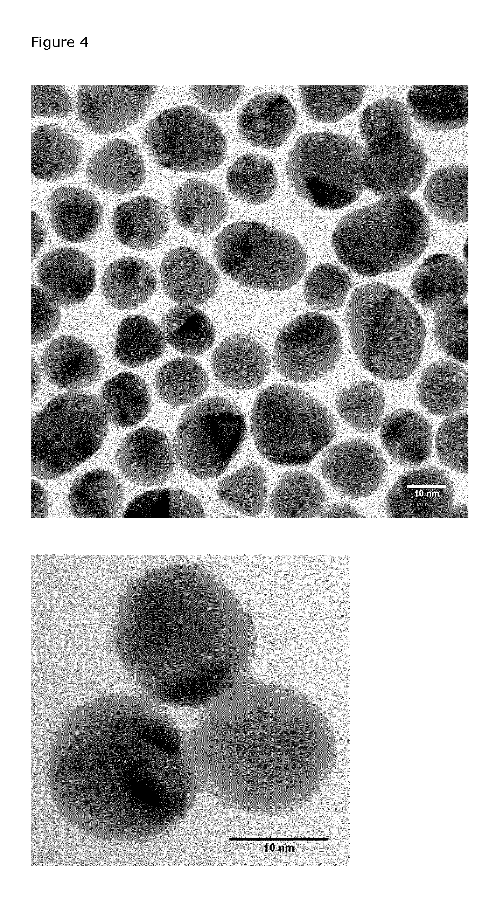

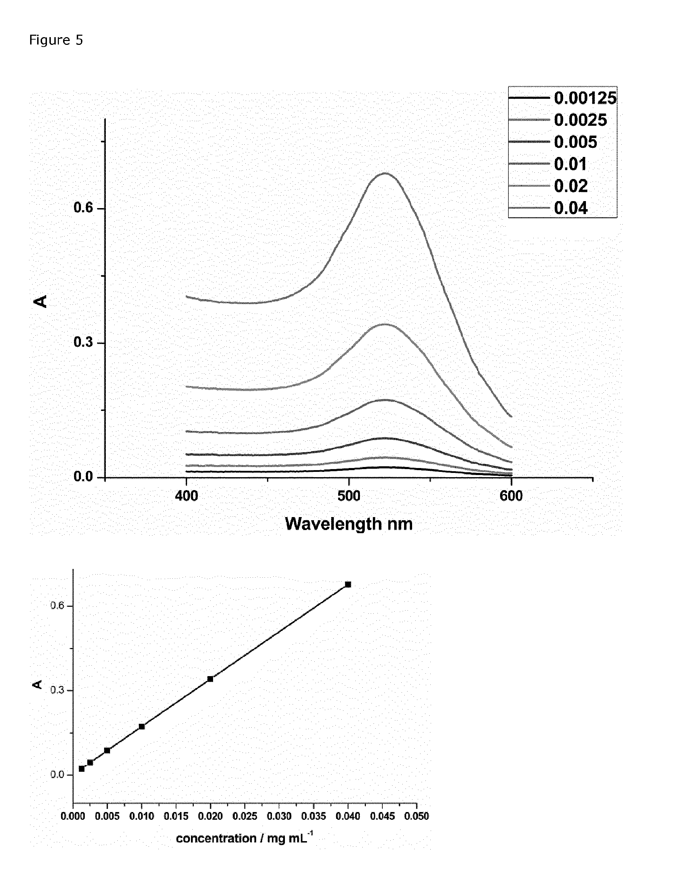

TEM image of nAu and UV-Visible spectra of 2 fold serial dilutions of nAu suspension are shown in Figure 4. Average diameter of nAu from TEM image is found to be 15.9 ± 2.7 nm after measuring 100 particles. The position of surface Plasmon resonance peaks appeared at 520 nm as expected [Haiss, W., et al., Determination of Size and Concentration of Gold Nanoparticles from UV-Vis Spectra. Analytical Chemistry, 2007. 79(11): p. 4215-4221] (Figure 5).

The classical citrate reduction route which is simple, inexpensive and non-toxic water-based

method described by Turkevich in 1951 with a slight modification was adopted to synthesize gold nanoparticles [Turkevich, J., P.C. Stevenson, and J. Hillier, A study of the nucleation and growth processes in the synthesis of colloidal gold. Discussions of the Faraday Society, 1951. 11(0): p. 55-75]. The classical method is limited for synthesizing nAu colloids of high gold concentrations. A tenfold increase in nanogold concentration with minimum polydispersity and great colloidal stability is achieved by the modified route reported by Li *et al..* Addition of alkali, in this case, helps to establish the optimum conditions including pH and ionic strength for the formation of stable nAu with minimum size distribution. The stability and size distribution would have been disturbed on mere increase of reagent concentrations to ten times.

### Example 4 - Preparation of polymer-coated nanoscale gold particles

The above synthesized nAu were coated with the co-polymers by shaking with water solutions of PVA-COOH and PVP-VA at room temperature for 6 hours. The ratio between nAu and polymers were kept as 1:1 and 1:10 by w/w.

The as-synthesized nAu is a deep wine red coloured stable suspension in water with citrate ligands around. Mere shaking with aqueous solutions of amphiphilic co-polymers PVP-VA and PVA-COOH led to simple ligand exchange reaction is used to enhance its affinity towards organic solvents also. Such polymer coated nAu are proved to be soluble in a number of organic solvents (data not shown) with different polarity.

The hydrodynamic diameters (*Dₕ*) and zeta potentials (measured by dynamic light scattering technique) of uncoated nAu, nAu - PVP-VA and nAu - PVA-COOH are shown in Table 1.

**Table 1**

| | | |
|---|---|---|
| The hydrodynamic diameters (*Dₕ*) and zeta potentials of uncoated nAu, nAu - PVP-VA and nAu - PVA-COOH | | |

| Species | Hydrodynamic diameter (nm) | Zeta potential (mV) |
|---|---|---|
| Uncoated nAu | 28 ± 2.6 | -51.4 ± 2.3 |
| nAu - PVP-VA | 29 ± 2.4 | -17.7 ± 1.3 |
| nAu - PVA-COOH | 66 ± 6.7 | -5.1 ± 0.6 |

The difference between actual particle size (size of inorganic core) measured by TEM and the hydrodynamic diameter proves the presence of the solvent layer when the particles are dispersed in a liquid medium (core-shell structure). It is evident from the results that coating also has an influence on *Dₕ*. Compared to PVA-COOH, PVP-VA is a very low molecular weight block co-polymer. The zeta potential measurements indicate that the co-polymers replace citrate ions and stabilize the particles mostly via steric factors.

### Example 5 - Preparation of a population of nanoparticles

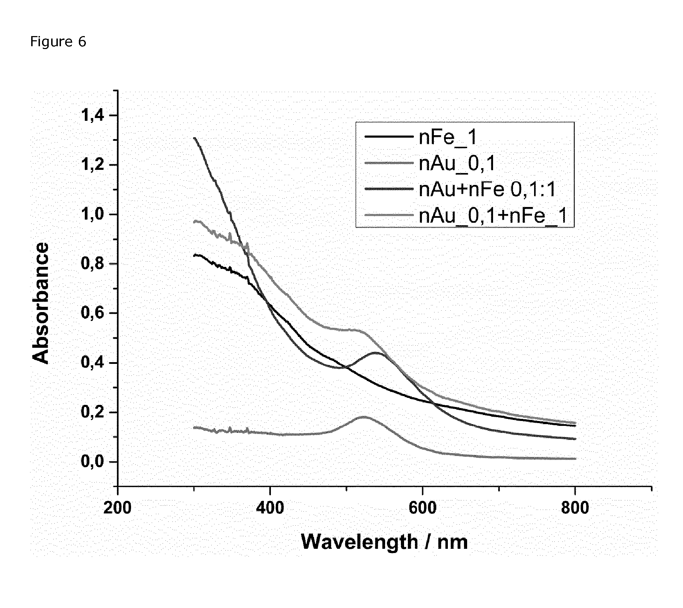

The above synthesised nZVI and nAu (stabilized by PVA-COOH) are mixed in the ratio of 1:0.1 (w/w) and a scan was performed between 300-800 nm by UV-Visible spectroscopy for the mixture and the individual particle suspensions. The specta is given in Figure 6. It is clear that the plasmonic peak of nAu is not quenched by the non-plasmonic nZVI (having 10 times higher concentration in the mixture), even though there is a very small red shift. This indicates the possibility of applying nAu as tracer particles in co-injuction with nZVI to monitor them. A more sensitive detection system can improve the situation very much.

### Example 6 - Partitioning of polymer stabilized nAu

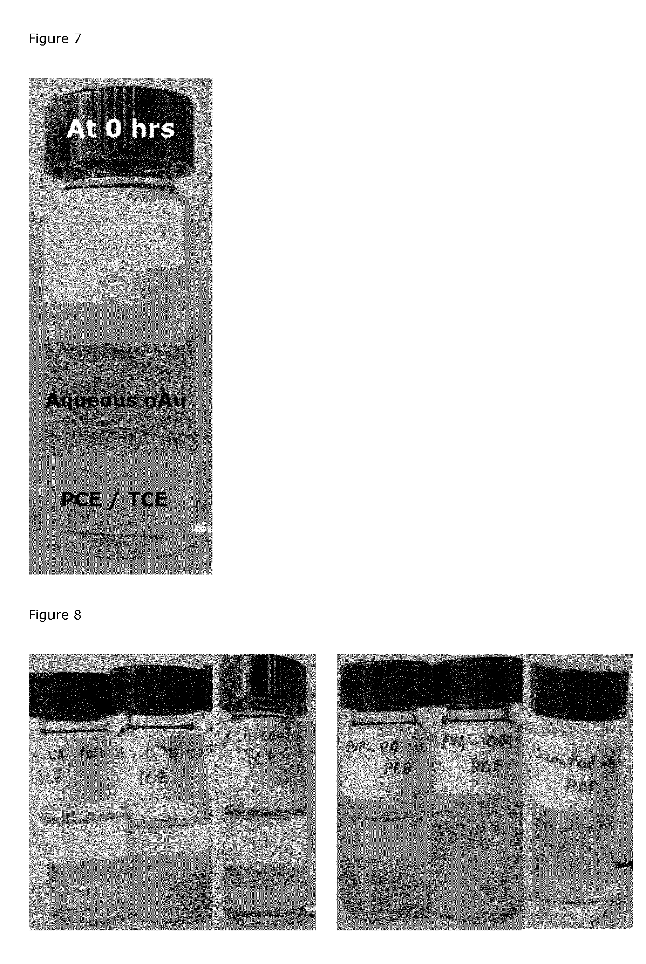

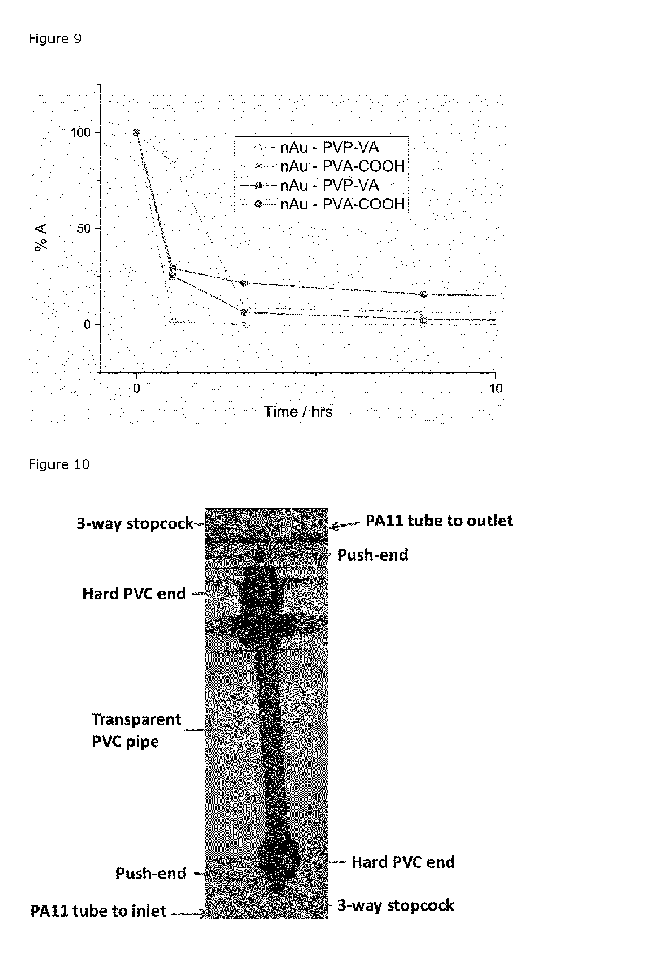

In order to understand affinity of polymer coated nanoparticles towards chlorinated organic solvents, partitioning experiments were conducted. Synthesised nAu was conditioned with PVA-COOH and PVP-VA. In both cases, the metal to polymer ratio was kept as 1:10. Concentration of nAu in each suspension was set to 0.01 mg/mL. These suspensions were then mixed with equal volumes of PCE and TCE along with uncoated nAu as a bench mark in screw cap bottles as shown in Figure 7. The bottles were shaken at room temperature. Absorbance of the aqueous layer (nAu) at 520 nm was measured at time 0, 3, 5, 8 and 48 hrs of shaking. The visual comparison of the bottles and a plot of fall in absorbance with respect to time is shown in Figure 8 and Figure 9 respectively. The decrease in absorbance indicates the migration of coated nAu into the organic phase. This migration in percentage is compared in Table 2. It is clear from the results that PVP-VA has higher partitioning tendency to TCE and PCE than PVA-COOH. Both polymers show higher affinity towards TCE. Significant partitioning of coated nAu happened within a few hours of mixing.

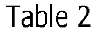

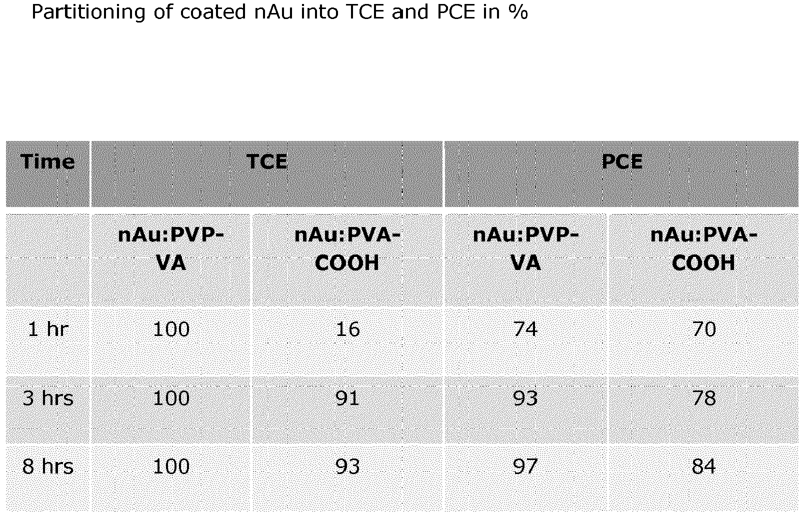

### Example 7 - Mobility studies of polymer stabilized nAu

The column experiments are used to simulate a groundwater aquifer in the best possible way. For the columns, it was decided to use transparent PVC pipes and 3-way stopcocks for the inlets and outlets (Figure 10). The columns were filled with tamped sand with a small grain size (DanSand00 0.32mm-0.71mm), flushed through with CO₂ (gas) to prevent air in the columns, and flushed through with tap water. The experiments were conducted with a fast flow velocity of 1.00 mL/min for uncoated nAu and nAu coated with two different polymers: PVA-COOH and PVP-VA. PVA-COOH was tested with a particle to polymer-ratio of 1:1 and 1: 10, while PVP-VA was only tested with 1:1. All nAu solutions had a gold concentration of 0.5 mg/mL, except PVA-COOH 1:10 which had a concentration of 0.25 mg/mL.

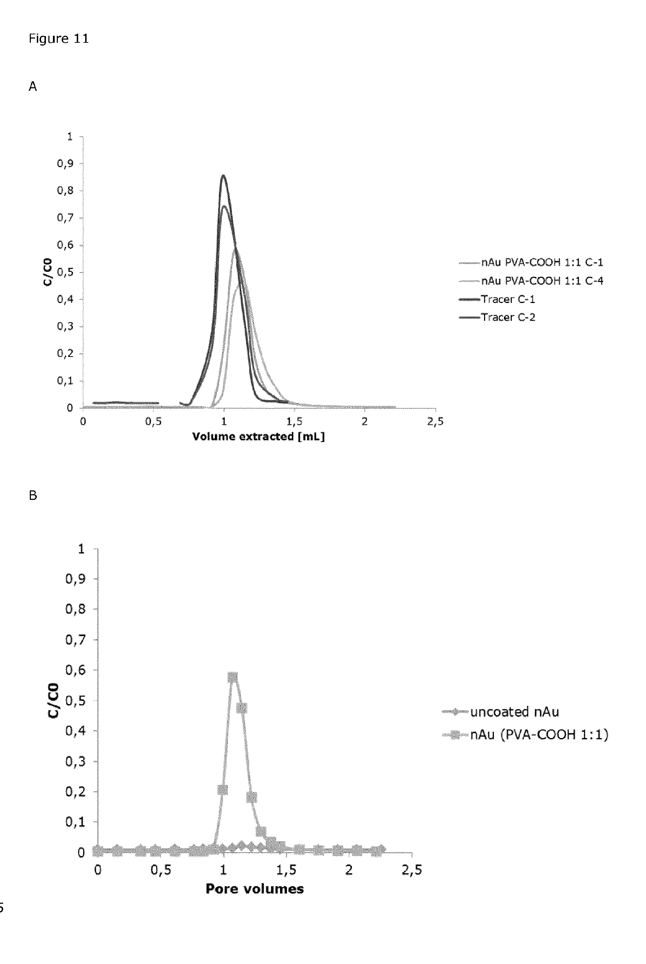

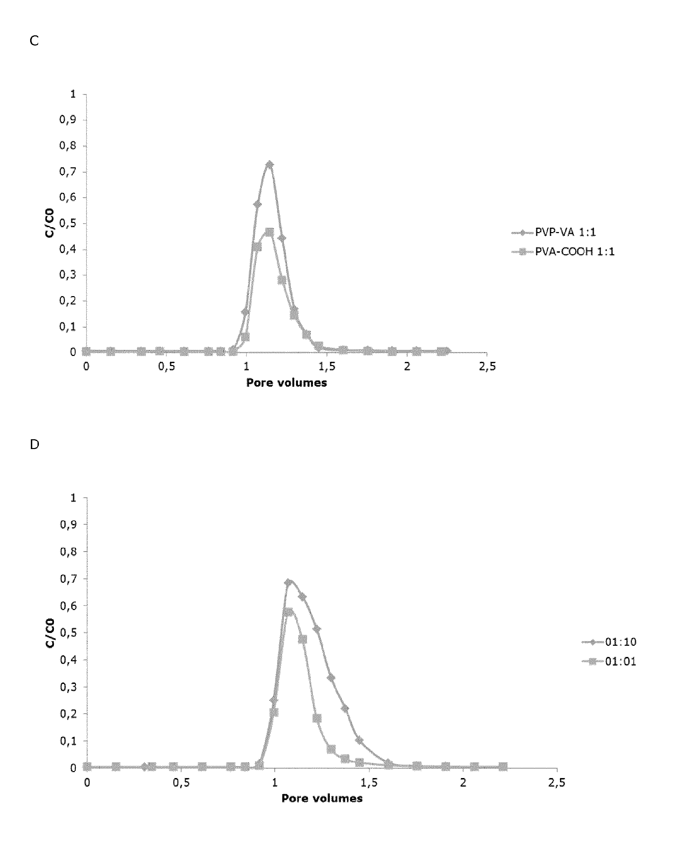

The results of mobility experiments are given in Figure 11. The recovery of various species is calculated in % from the total volume of the species extracted at the outlet of each run during the mobility experiments and shown in Table 3.

**Table 3**

| | | | |
|---|---|---|---|
| Recovery of various species at the column outlet during the mobility experiments | | | |

| | Inlet (mL) | Total volume | Recovery (%) |
|---|---|---|---|
| | | | |

| | | extracted At the outlet (mL) | |
|---|---|---|---|
| Chloride | 12 | 10.2 | 85 |
| Uncoated nAu | 12 | 0.755 | 6 |
| nAu:PVP-VA (1:1) | 12 | 8.92 | 74 |
| nAu:PVA-COOH (1:1) | 12 | 6.49 | 52 |
| nAu:PVA-COOH (1:10) | 12 | 11.3 | 94 |

It was found that uncoated nAu is not mobile - even after twice the time frame that coated nAu needed before it was found with the highest concentration in the outlet it was not detected. Coated nAu, on the other hand, is mobile in a sand column at a fast flow velocity with a retardation factor of 1.1 compared to the waterfront. Different coatings show an effect in the normalized effluent concentration (C/C₀), where nAu (PVP-VA 1:1) show a C/C₀ of 0.73, whereas PVA-COOH 1:1 gives a value of 0.58. Due to ligand exchange and aggregation of coated nAu, no recoveries are 100 %. The recovery of PVP-VA 1:1 is 74 %, while PVA-COOH 1:1 gives a recovery of 51 %. Effects of particle to polymer-ratio are seen in big differences in the recoveries. The highest polymer ratio (1:10) gives the absolute highest degree of recovery of 94 %, which is 1.2 times higher than for the 1:1 ratio. Moreover C/C₀ of nAu (PVA-COOH 1:10) was 0.68, which is 1.2 times bigger than for PVA-COOH 1:1.

## Claims

1. A population of non-aggregated polymer-coated nanoparticles having a mean particle size in the range of 1-100 nm, said population comprising (i) a first subpopulation of (re)active particles coated with a first polymer, and (ii) a second subpopulation of non-(re)active tracer particles coated with a second polymer, wherein the weight ratio between said first subpopulation and said second subpopulation is from 85:15 to 99.99:0.01.

2. The population according to any one of the preceding claims, wherein the first subpopulation of (re)active particles are catalytically active particles.

3. The population according to any one of the preceding claims, wherein the first subpopulation of (re)active particles is selected from zero valent iron particles.

4. The population according to any one of the preceding claims, wherein the first polymer is selected from hydrophilic polymers and amphiphilic polymers.

5. The population according to any one of the preceding claims, wherein the first subpopulation of (re)active particles is only partly coated.

6. The population according to any one of the preceding claims, wherein the material of the tracer particles is capable of being detected by a non-destructive optical method at an at least a 100-fold lower concentration than the material of the (re)active particles.

7. The population according to any one of the preceding claims, wherein the second subpopulation of non-(re)active tracer particles is selected from gold particles and lanthanide-doped particles.

8. The population according to any one of the preceding claims, wherein the second polymer is selected from hydrophilic polymers and amphiphilic polymers.

9. The population according to any one of the preceding claims, wherein the second polymer is substantially identical to the first polymer.

10. The population according to any one of the preceding claims, wherein the combined amount of the first subpopulation and the second subpopulation constitutes at least 90 % by weight of the total population, in particular essentially constitutes the entire population.

11. A composition comprising the population of nanoparticles according to any one of claims 1-10.

12. The composition according to claim 11 which is a stable colloid solution of the nanoparticles.

13. Use of the population of nanoparticles according to any one of the claims 1-10 or a composition according to any one of the claims 11-12 for remediation, including *in-situ* remediation, of contaminated ground water.

14. Use of the population of nanoparticles according to any one of the claims 1-10 or a composition according to any one of the claims 11-12 for water treatment.
